# EUROPEAN PATENT APPLICATION

(11) **EP 0 536 767 A1**
(43) Date of publication of application: **14.04.1993**
(21) Application number: 92117256.5
(22) Date of filing: 09.10.1992
(51) Int. Cl.: C05F 17/02, C05F 1/02, C05F 11/06, B01F 7/00

(54) **Mixing triturator for agricultural and industrial waste**

(30) Priority: 11.10.1991 IT MN910027
(71) Applicant: MUTTI ADOLFO S.p.A., I-46042 Castel Goffredo (Mantova) (IT)
(72) Inventor: Mutti, Ivan, I - 46042 Castel Goffredo,Prov.Mantova (IT)
(74) Representative: Modiano, Guido, Dr.-Ing.

(57) **Abstract**

The mixing triturator for agricultural and industrial waste, characterized in that it comprises a bin (1) which is provided, at least at one wall portion, with an interspace (19a-c) for the conveyance of a heating fluid, and is internally provided with a system of scrolls which comprises four scrolls (8a-b,9a-b) whose longitudinal axes are parallel to the bottom, two scrolls being proximate to the bottom and two being located in a raised position, and a fifth scroll (12) whose axis is at right angles to the bottom and is located proximate to the centerline of the front panel.

## Description

The invention relates to a mixing triturator for agricultural industrial waste.

The problem of converting large amounts of agricultural and industrial waste, such as for example prunings, cardboard, wood waste in general, sludge from conditioning plants, processing residues in industrial slaughterhouses or in the oenological industry into compost usable as organic fertilizer, is known.

An essential operation included in the conversion process is the trituration and mixing of said waste, and the currently commercially available machines suitable for this need are not such as to have satisfactory characteristics.

The aim of the present invention is to provide a mixing triturator for agricultural and industrial waste which allows to process said waste so as to obtain a high-quality compost as final product.

This aim is achieved by a mixing triturator for agricultural and industrial waste, according to the invention, characterized in that it comprises a bin which is provided, at least at one wall portion, with an interspace for the conveyance of a heating fluid, installed on a base for resting on the ground and comprising, inside it, a system of appropriately motorized scrolls which are suitable to create a circulation of the product, which is introduced by means of an upper opening and is discharged, once processing is complete, by means of a hatch defined within the bottom, said circulation being directed from the rear panel to the front panel in the region proximate to the bottom and in the opposite direction in the region proximate to the upper opening; said scroll system comprising four scrolls whose longitudinal axes are parallel to the bottom, two of said scrolls being located proximate to the bottom, the other two scrolls being located in a raised position, and a fifth scroll whose axis is perpendicular to the bottom and is located proximate to the centerline of the front panel.

Further characteristics and advantages will become apparent from the description of a preferred but not exclusive embodiment of the invention, illustrated only by way of non-limitative example in the accompanying drawings, wherein:
figure 1 is a perspective view of the invention, with some parts removed for the sake of clarity in illustration;
figure 2 is a sectional view of the bin alone, taken at the plane II-II;
figure 3 is a perspective view of the invention with the bin in inclined position.

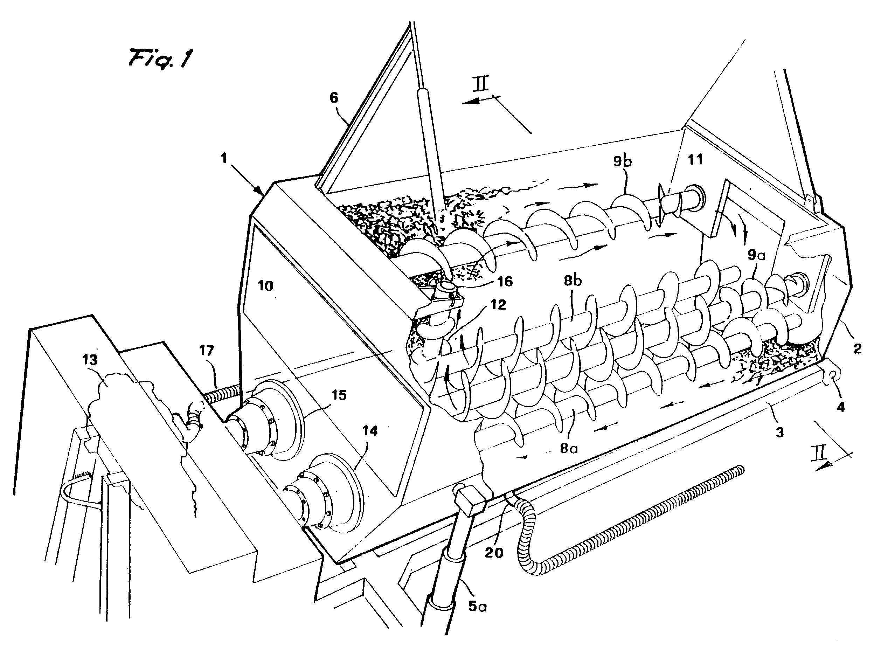

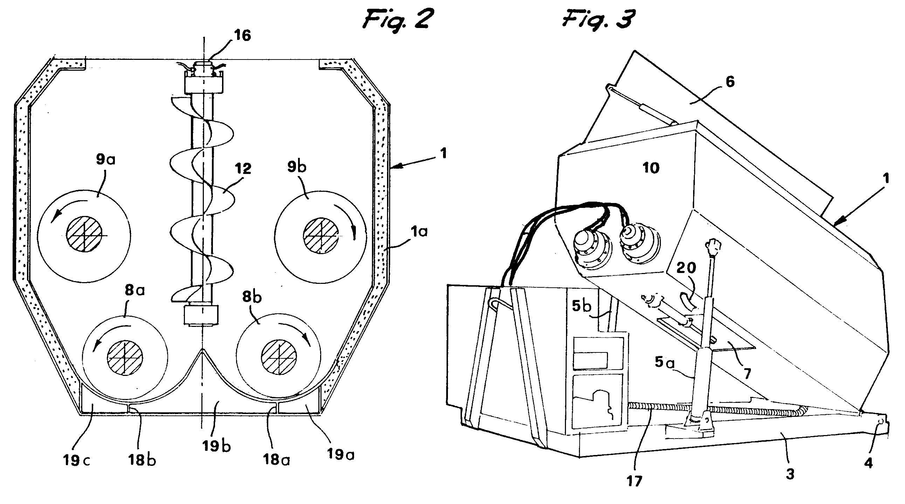

With reference to the above figures, the reference numeral 1 designates the bin, which is hinged at the lower edge of the rear panel 2 to the ground resting base 3; the numeral 4 designates the pivot for the articulation of the hinge, and 5a, 5b designate two hydraulic cylinders which can move the bin 1 from the position in which it rests on the base 3, shown in figure 1, to any inclined position with respect to said base, such as the one shown in figure 3, for functional reasons explained hereinafter.

Load cells are present at the hinge for the pivoting of the bin to the base and at the couplings of the stems of the two hydraulic cylinders 5a, 5b to said bin.

Said bin 1 is provided with an upper opening for the introduction of the product to be processed; said opening is provided with a lid 6 and the bin is further provided with a hatch 7 which is comprised within the bottom for the discharge of the finished product.

A system of motorized scrolls is present inside the bin 1 and comprises a first pair 8a, 8b proximate to the bottom and a second pair 9a, 9b in a raised position, with longitudinal axes parallel to the bottom: in the first pair of scrolls, which run from the rear panel 2 to the front panel 10, the one designated by the reference numeral 8a is a right-hand one and rotates counterclockwise, whereas the one designated by the reference numeral 8b is a left-hand one and rotates clockwise; in the second pair of scrolls, which run from the front panel 10 to the centrally open partition 11 located in front of the rear panel 2, the scroll designated by the reference numeral 9a is a left-hand one and rotates counterclockwise, whereas the one designated by the reference numeral 9b is a right-hand one and rotates clockwise.

Each one of said scrolls has, in a known manner, proximate to the end toward which the product is conveyed, a short section in which the spiral reverses its direction with respect to the previous one.

The scroll system present in the bin 1 furthermore comprises the scroll 12, which has its axis at right angles to the bottom and is located proximate to the centerline of the front panel 10.

The internal-combustion engine 13 also rests on the base 3 and is connected to a hydraulic control unit for the actuation not only of the actuation cylinders comprised within the device but also of the hydraulic motor 14 which moves the scrolls 8a and 9a, of the hydraulic motor 15 which moves the scrolls 8b and 9b, and of the hydraulic motor 16 which moves the scroll 12.

The exhaust of the products of the combustion of the motor 13 is connected, by means of the duct 17, to an interspace which is defined at the bottom of the bin 1 and is divided by the partitions 18a and 18b into three chambers 19a, 19b and 19c which define a fume circulation with three circular motions; said fumes in fact enter the chamber 19a at the end proximate to the rear panel 2, flow through said chamber up to the front panel 10, where a perforated region of the partition 18a allows them to pass into the chamber 19b, which is crossed toward the rear panel 2 until a perforated region of the partition 18b allows passage toward the chamber 19c for the last reversal, with a discharge at the coupling 20.

It should be stressed that the wall of the bin 1 which is not affected by the above described interspace is provided with an insulating lining 1a which contains the heat transferred by the fumes to the mass being processed.

Operation of the invention is as follows: after starting all the scrolls, the products to be processed are inserted in the bin 1, starting for example from the prunings and continuing subsequently with the sludge of conditioning plants, cardboard and wood waste; finally, the bacteria required to trigger the thermophilic phase of the process, which lasts for three to four hours, are introduced, and by virtue of the combined trituration and mixing action performed by the scrolls and of the addition of heat provided by the fumes of the motor 13, one finally obtains compost which is discharged by gravity from the hatch 7 onto a conveyor belt which is inserted below the bin 1 arranged as shown in figure 3.

The scroll system present in the bin 1 causes a circulation of the product being processed, indicated by the arrows of figure 1, which ensures that said product is kept soft, avoiding packing and clogging, which is essential for the satisfactory outcome of the process.

The scrolls 8a and 8b present proximate to the bottom in fact guide the product from the rear panel 2 toward the front panel 10, where the presence of the scroll 12 considerably facilitates the ascent of said product, which is already in itself induced by the thrust of said scrolls 8a, 8b; indeed, it should be stressed that the action of the scroll 12 is essential in circulating a heavy product such as the one which must be treated and that, by virtue of the presence of a hardly negligible amount of sludge, it differs entirely in terms of behavior from the light materials, such as hay or flour, which are effectively mixed even in the absence of a scroll such as 12.

The ascent of the product makes said product available to the action of the upper scrolls 9a and 9b, which guide it toward the rear partition 11 and then let it drop through the opening provided at the center of said partition, so that it is recaptured by the lower scrolls 8a, 8b; naturally, part of the product moves toward the partition 11, since it is directly in contact with the scrolls 9a, 9b, whereas the mass comprised between said scrolls moves because it is entrained by friction by the part which is in contact with the scrolls.

The inclination which can be given, according to the operator's choice, to the bin 1 by actuating the hydraulic cylinders 5a and 5b is often decisive, in conditions of particular density of the product to be processed, in producing the translatory motion of said mass.

The described invention is susceptible to numerous modifications and variations, all of which are within the scope of the inventive concept; all the details may furthermore be replaced with other technically equivalent elements, and the materials employed, as well as the shapes and dimensions, may be any.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Mixing triturator for agricultural and industrial waste, characterized in that it comprises a bin which is provided, at least at one wall portion, with an interspace for the conveyance of a heating fluid, installed on a base for resting on the ground and comprising, inside it, a system of appropriately motorized scrolls which are suitable to create a circulation of the product being processed, which is introduced by means of an upper opening and is discharged, once processing is complete, by means of a hatch defined within the bottom, said circulation being directed from the rear panel to the front panel in the region proximate to the bottom and in the opposite direction in the region proximate to the lid which closes the upper opening; said scroll system comprising four scrolls whose longitudinal axes are parallel to the bottom, two located proximate to the bottom and two located in a raised position, and a fifth scroll whose axis is perpendicular to the bottom and is located proximate to the front panel at the centerline thereof.

2. Mixing triturator according to claim 1, characterized in that the pair of scrolls located proximate to the bottom of the bin extends from the front panel to the rear panel and comprises a right-hand scroll which rotates counterclockwise and is located on the left with respect to an observer facing the front panel, and also a left-hand scroll which rotates clockwise, whereas the pair of scrolls located in raised position extends from the front panel to a centrally open partition located in front of the rear panel and comprises, above the right-hand scroll, a left-hand scroll which rotates counterclockwise and also a right-hand scroll which rotates clockwise.

3. Mixing triturator according to one or more of the preceding claims, characterized in that an internal-combustion engine also rests on the base of the bin and is connected to a hydraulic control unit for actuating at least hydraulic motors which move the scrolls, a duct being provided for the conveyance of the product of the combustion of said motor toward the interspace comprised in a portion of the wall of said bin.

4. Mixing triturator according to one or more of the preceding claims, characterized in that the interspace for the conveyance of the heating fluid constituted by the products of the combustion of the motor is divided by partitions so as to create a circulation with three circular paths.

5. Mixing triturator according to one or more of the preceding claims, characterized in that the wall of the bin which is not affected by the interspace has an insulating lining.

6. Mixing triturator according to one or more of the preceding claims, characterized in that the bin is pivoted to the base at the rear panel and is provided with means suitable to move it from the position in which it rests on the base to a position in which it is inclined at any angle with respect to said base.
